(19) Europäisches Patentamt
European Patent Office
Office européen des brevets

(11) **EP 2 123 599 A1**

(12) **EUROPEAN PATENT APPLICATION**

(43) Date of publication:
25.11.2009 Bulletin 2009/48

(51) Int Cl.:
*C01B 3/38* (2006.01)          *B01J 8/02* (2006.01)
*B01J 8/04* (2006.01)

(21) Application number: 09157393.1

(22) Date of filing: 06.04.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR

(30) Priority: 07.04.2008 US 80919

(71) Applicants:
• Precision Combustion, Inc.
New Haven, CT 06473 (US)
• Honda Motor Co., Ltd.
Minato-ku
Tokyo 107-8556 (JP)

(72) Inventors:
• Roychoudhury, Subir
Madison, CT 06443 (US)
• Spence, David
Beacon Falls, CT 06403 (US)

• Mastanduno, Richard
Milford, CT 06460 (US)
• Walsh, Dennis E.
Richboro, PA 18954 (US)
• Iwamoto, Jun
Saitama 351-0193 (JP)
• Motohashi, Go
Saitama 351-0193 (JP)
• Mikami, Hitoshi
Saitama 351-0193 (JP)
• Walker, Eric
Raymond, OH 43067-9705 (US)

(74) Representative: Prechtel, Jörg
Weickmann & Weickmann,
Patentanwälte,
Postfach 860 820
81635 München (DE)

(54) **Fuel reformer**

(57) A fuel reformer includes a reforming portion having a tubular catalytic converter that is composed of a substrate supporting the catalytic component, and is arranged to have a center axis extending along the supply direction of the fuel and oxidizer derived from a supply portion, and a communication passage arranged along an inner wall of the catalytic converter and communicating with the supply portion. The fuel and oxidizer supplied from the supply portion to the communication passage pass from the inner wall of the catalytic converter to an outer wall thereof by forced convection, thereby reforming the fuel.

FIG. 2

**Description**

BACKGROUND OF THE INVENTION

Field of the Invention

The present invention relates to fuel reformers for reforming fuel to produce hydrogen-rich gas, and more particularly, to fuel reformers that can efficiently reform fuel with superior startability, low manufacturing cost, and small size.

Related Art

Hydrogen is a clean energy fuel that has received considerable attention as a future alternative fuel to oil. Research is advancing hydrogen as an energy source in applications such as fuel cells, and internal combustion engines. Particularly, in addition to research of hydrogen applications as an energy source for hydrogen engines and hydrogenation engines, much effort has been invested in the research of applying hydrogen as a reducing agent for purifying harmful waste gases such as $NO_x$ and $SO_x$. Thus, a considerable amount of research has been conducted for the advancement of hydrogen use in recent years, and at the same time, various methods are being examined for hydrogen production.

In a typical production method of hydrogen, hydrogen-containing molecule such as hydrocarbons, water, and alcohol fuel are decomposed using catalytic reforming reactions, pyrolysis reactions, or electrolytic reactions, and then the hydrogen atoms combine to yield hydrogen gas molecules. Since methods enploying pyrolysis reactions require extreme temperatures and stable thermal energy, and methods utilizing electrolytic reaction have higher power consumption and slower reaction rates, the two methods are unable to answer the transition in hydrogen demand. For this reason, in order to cope with the transition in hydrogen demand, methods using catalytic reforming reactions are preferably used.

Examples of fuels used in catalytic reforming reaction are natural gas, gasoline, light oil (diesel fuel), alcohol fuels such as methanol or ethanol, etc. Among them, light oil in particular has a wider carbon-value distribution and has higher carbon content, which leads to difficulty in conducting a reforming reaction with superior efficiency and without outputting unreformed fuel. Moreover, since it is difficult to ignite light oil, achieving improved startability is also difficult.

A typical reforming reactor used for a catalytic reforming reaction includes a tube-type flow reactor as disclosed, for example, in U.S. Patent No. 6,869,456 B2 (Patent Document 1), and U.S. Patent No. 6,887,436 B1 (Patent Document 2). An advantage of this reactor is that it can be manufactured easily, and also a supported catalytic converter can be manufactured easily due to its cylindrical shape.

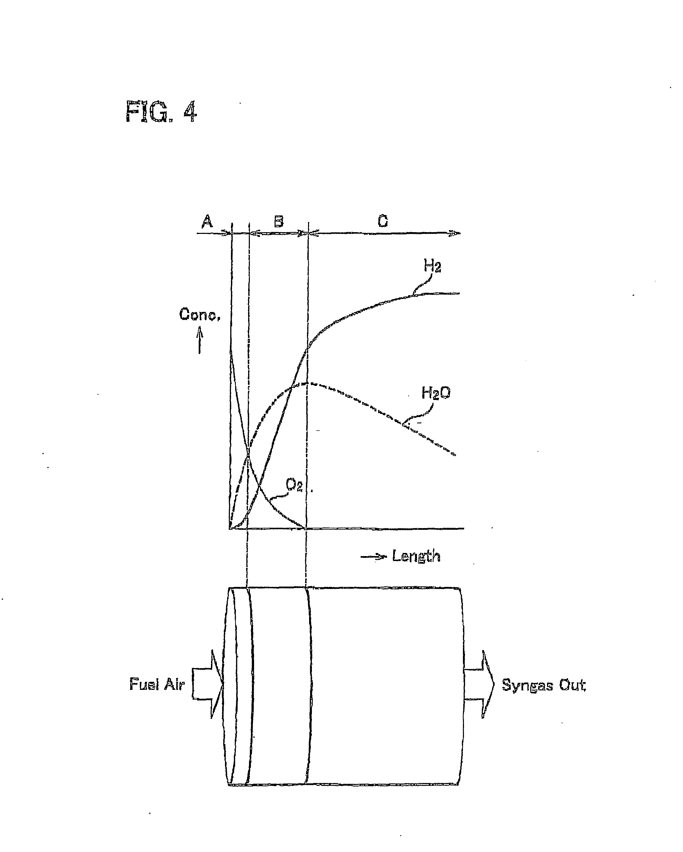

Referring to FIG. 4, the reaction in the catalytic converter of the tube-type flow reactor is generally divided into three reactions. The three reactions are given by the following chemical equations (1) to (3). It is assumed that, the reactions expressed by the equations (1), (2), and (3) occur predominantly in regions A, B, and C of FIG. 4, respectively. The first reaction is a combustion reaction (complete combustion) that occurs on the outermost surface, through which steam is generated by the reaction of fuel and oxygen. After the oxygen amount is reduced, the second reaction generates hydrogen and carbon monoxide through partial oxidation of fuel by way of an oxidation reaction (catalytic partial oxidation). In the third reaction, hydrogen is generated through the reaction of steam generated in the first reaction and fuel by way of a reaction (steam reforming), with the oxygen amount at the position in the catalytic converter being roughly zero.

$$C_nH_m+(n+\tfrac{1}{4}m)O_2\rightarrow mHH_2O+nCO_2 \qquad \text{Equation (1)}$$

$$C_nH_m+\tfrac{1}{2}nO_2\rightarrow\tfrac{1}{2}mH_2+nCO \qquad \text{Equation (2)}$$

$$C_nH_m+nH_2O\rightarrow(n+\tfrac{1}{2}m)H_2+nCO \qquad \text{Equation (3)}$$

The order of the reaction rates of the reactions is first reaction > second reaction > third reaction. The first reaction occurs on the outermost surface layer with which a gas mixture of fuel and oxygen-containing gas makes contact at an early stage. With the second reaction as well, the reaction area is located in the vicinity of the surface layer. Since the third reaction has a slower reaction rate, it is necessary to reduce the flow rate of the reaction gas or increase the volume of the catalytic converter to increase the efficiency.

The three reactions in the catalytic converter are not clearly distinguished from each other, and do not occur as a uniform reaction. Of the reactions, for example, the first and second reactions or the second and third reactions, progress parallel to each other. The reactions are influenced by the concentration of fuel, the concentration of an oxidizer such as oxygen or steam, catalyst type, the catalyst loading amount, the temperature distribution in the catalytic converter , etc.

[Patent Document 1] US Patent No. 6869456
[Patent Document 2] US Patent No. 6887436

SUMMARY OF THE INVENTION

Since the partial oxidation reaction depicted to represent the second reaction is an exothermic reaction, the temperature of the catalyst layer rises by way of spontaneous heat. With reactors relying on this reaction, the site in which the partial oxidation occurs is exposed to the remarkably high temperature of nearly 1000°C. For this reason, a heat-resistant metal should be used, which leads to an increase in weight as well as manufacturing cost.

The partial oxidation reaction is a differential reaction, and is greater in reaction rate in the reaction early-stage section at which the catalytic converter makes contact with the fuel. When the linear velocity at the reaction early-stage section is slow, the combustion reaction becomes dominant, so that the hydrogen generated is combusted, and the yield of hydrogen is reduced. Simultaneously, since the temperature of the catalytic converter increases, it is necessary to restrict the amount of fuel injected and the amount of air injected, resulting in an inability to increase the amount of hydrogen produced.

The temperature of the catalytic converter can be controlled by controlling the amount of fuel and oxygen. When the catalytic converter is lit-off at an early stage by burning fuel at the time of startup to quickly raise the temperature of the catalytic converter, it is essential that the combustion occur in a small space so as to efficiently transmit heat throughout the catalytic converter. In this regard, with the tube-type flow reactor, if fuel is combusted upstream of the catalytic converter, combustion energy will propagate not only to the surface of the catalytic converter, but to the inner wall of the tube, causing a loss of heat.
Another approach for minimizing the peak reactor temperature is to introduce steam. However using steam is undesirable for many applications as it creates a burden. In this invention we are able to dry reform (without use of water) the hydrocarbon fuel without exceeding practical temperature limits.

Moreover, with the tube-type flow reactor, fuel injected by a fuel injector may condense on the inner wall of the tube, causing deviations in the fuel and oxygen mixture ratio. The yield of hydrogen, which varies with the fuel and oxygen mixture ratio, becomes a factor of variation with fluctuations in the production amount of hydrogen and temperature. In order to avoid such complication, fuel and air (oxygen) mixed and preheated to a high temperature may be injected. However, this solution requires a heater, leading to an increase in reactor size, and an increase in manufacturing cost and operating energy.

Moreover, with the catalytic converter of the tube-type flow reactor, gas flows in one direction, and the space velocity as an index for evaluating a catalytic converter is substantially constant. As described above, the reactions in the catalytic converter do not occur uniformly, with the first reaction progressing quickly and the third reaction progressing slowly. In order to enhance reaction efficiency, the diameter of the catalytic converter may be varied. However, this solution raises problems of increasing reactor size and utilizing more combustion heat.

As described above, in order to achieve efficient fuel reforming, conventional fuel reformers cannot avoid adversely affecting the startability, increasing the manufacturing cost, and increasing the system size. Therefore, it is beneficial to develop fuel reformers that can efficiently reform fuel with superior startability, low manufacturing cost, and small size.

In order to solve the problems mentioned above, we have conducted thorough research. As a consequence, we have found that the problems could be solved by adopting a configuration that allows a gas mixture of fuel and an oxidizer to be supplied to a hollow portion of a tubular catalytic converter, and to pass from the inner wall of the catalytic converter to the outer wall thereof by diffusing radially. Thus, we have brought the present invention to perfection. Specifically, the present invention provides the following.

In a first aspect of the present invention, a fuel reformer is provided including: a reforming portion that reforms a fuel by the reaction with an oxidizer to generate a hydrogen-rich fuel gas; a fuel inlet portion that introduces the fuel; an oxidizer inlet portion that introduces the oxidizer; a mixer that mixes the fuel and oxidizer as introduced; a supply portion that supplies the fuel and oxidizer as mixed in the mixer to the reforming portion; and an outlet portion that discharges the hydrogen-rich fuel gas generated in the reforming portion, in which the reforming portion includes a tubular catalytic converter including a substrate supporting a catalytic component, the catalytic converter being arranged to have a center axis extending along a supply direction of the fuel and oxidizer out of the supply portion, and a communication passage arranged along an inner wall of the catalytic converter and communicating with the supply portion, in which the fuel and oxidizer supplied from the supply portion to the communication passage pass from the inner wall of the catalytic converter to an outer wall thereof by diffusing radially, thereby reforming the fuel.

In a second aspect of the present invention, whence the preferable reactor inlet linear velocity is between approximately five to thirty times the reactor outlet linear velocity.

In a third aspect of the present invention, the fuel reformer as described in the first aspect further includes at least one selected from a glow plug and a spark plug, in an inner tube of the catalytic converter.

In a fourth aspect of the fuel reformer described in the first aspect or second aspect of the present invention, the oxidizer is a gas mixture in which the main components are oxygen and nitrogen.

In a fifth aspect of the fuel reformer as described in any one of aspects one to three of the present invention, the oxidizer is air.

In a sixth aspect of the fuel reformer as described in any one of aspects one to four of the present invention, the fuel is typically a hydrocarbon fuel.

In a seventh aspect of the fuel reformer as described in any one of aspects one to five of the present invention, the fuel is light oil.

In an eighth aspect of the fuel reformer as described in any one of aspects one to six of the present invention, the catalytic converter is formed so that a relationship such that the inlet linear velocity ranges between 35 and 150 cm/sec and exit linear velocity range between 5 and 20 cm/sec. A particular subset of interest is covered by the expression $L > D_2^2/4D_1$, where $D_1$, $D_2$, and $L$ are an inside diameter, and a length of the catalytic converter.

In an ninth aspect of the fuel reformer as described in any one of aspects one to seven of the present invention, the supply portion includes an injector, and may include an electromagnetically driven injector.

In a tenth aspect of the fuel reformer described above, the fuel injector has the capability of periodic lean operation to oxidize any coke that may form and collect in the reactor during normal operation. This can however result in excessively high temperatures. Care has to be taken to avoid high reactor temperatures during the periodic lean operation. The rich/lean rate is directed by converter size (reactor mass), fuel flow rate, air flow rate, etc. Three possible embodiments of lean operation are described later and are subject to operation below the maximum allowable reactor temperature of 1050°C.

The present invention provides a fuel reformer that can efficiently reform fuel with superior startability, low manufacturing cost, and small size when compared with conventional tube-type flow reactors.

BRIEF DESCRIPTION OF THE DRAWINGS

FIG. 1 is a perspective view illustrating a fuel reformer according to an embodiment of the present invention;

FIG. 2 is a longitudinal sectional view illustrating the fuel reformer according to the embodiment;

FIG. 3 is perspective view illustrating a catalytic converter of the fuel reformer according to the embodiment; and

FIG. 4 is a diagram illustrating a conventional tube-type flow reactor.

DETAILED DESCRIPTION OF THE INVENTION

An embodiment of the present invention is described hereafter with reference to the drawings. However, the present invention is not limited thereto.

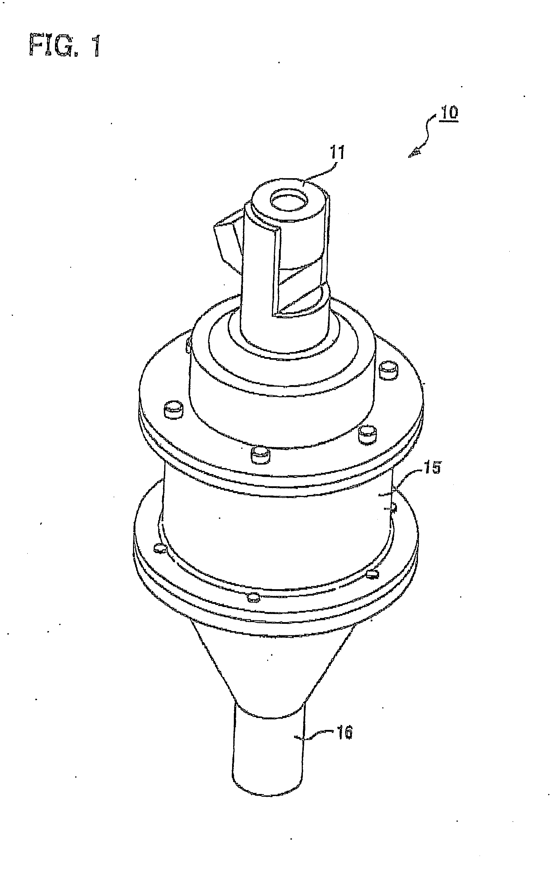

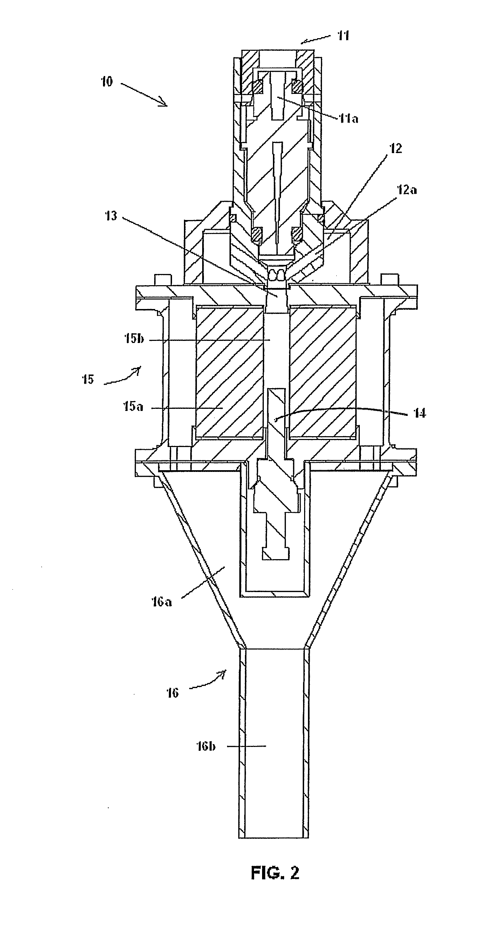

FIG. 1 is a perspective view illustrating a fuel reformer 10 according to an embodiment of the present invention, and FIG. 2 is a longitudinal sectional view illustrating the fuel reformer according to the embodiment. Referring to FIGS. 1 and 2, the fuel reformer 10 includes a reforming portion 15 for reforming fuel by way of an oxidizer to generate hydrogen-rich fuel gas. Specifically, the fuel reformer 10 includes a fuel inlet portion 11 for introducing fuel, an oxidizer inlet portion 12 for introducing an oxidizer, a mixer 13 for mixing the fuel and oxidizer introduced, a supply portion or communication passage 15b for supplying fuel and oxidizer mixed in the mixer 13 into the reforming portion 15, and an outlet portion 16 for discharging hydrogen-rich fuel gas generated in the reforming portion 15.

The fuel inlet portion 11 includes a fuel injector 11a for introducing fuel. The fuel injector 11a corresponding to an injector of the present invention is connected to a fuel tank, not shown, via a fuel line and fuel pump. The fuel inlet 11 includes a fuel injector 11a, thus allowing for control of the injected fuel amount with superior accuracy. Particularly, even when an abundance of hydrogen is demanded by an abrupt increase in load, fuel can be introduced with superior responsiveness.

The oxidizer inlet portion 12 includes a nozzle 12a for introducing an oxidizer. The nozzle 12a is connected to an oxidizer feed, not shown, via an oxidizer line. The nozzle 12a has a plurality of openings with respect to a mixer 13 for mixing fuel and oxidizer as introduced. The number and angle of the openings of the nozzle 12a are provided as appropriate. Preferably, the number and angle are set to provide an arrangement by which vortex flow is generated to uniformly mix the fuel and oxidizer in the mixer 13. This allows for atomization and diffusion of the fuel to be achieved, in order to obtain sufficient mixing of the fuel and oxidizer, which results in an increase in reaction rate, as well as improving the effect of combustion during startup.

In the mixer 13, fuel and oxidizer from the fuel injector 11a and the nozzle 12a are uniformly mixed. The mixer 13 needs to provide a space to allow for uniform mixing of the fuel and oxidizer introduced. With the fuel reformer 10 according to the embodiment, the mixer 13 is arranged upstream of the catalytic converter 15a to communicate with the communication passage 15b. In the embodiment, the supply portion is provided including the fuel inlet portion 11, the oxidizer inlet portion 12, and the mixer 13. Optionally, the supply portion may be arranged separately,

A glow plug 14 as an ignition device is arranged downstream of the mixer 13. The ignition device may be a spark plug in place of the glow plug 14. By heating the glow plug 14, a gas mixture of fuel and an oxidizer is heated and combusted. Since the mixer 13 is located upstream of the glow plug 14 and the catalytic converter surface, backfire tends to occur in the case of an inflammable fuel. In order to prevent backfire and protect the fuel injector 11a, the linear velocity in the mixer 13 should be increased appropriately.

In order to obtain a fuel reformer of low manufacturing cost, the fuel injector 11a preferably includes a versatile electromagnetically driven injector. However, in order to generate a small amount of hydrogen, it may be necessary to reduce the nozzle orifice of the fuel injector 11a, as well as the capacity. When the nozzle orifice is arranged in the center, since being directly subjected to operation of a driving plate, the injection angle is smaller, and it becomes difficult to atomize the fuel. Therefore, the nozzle orifice could be arranged offset with respect to the operational axis of the fuel Injector 11a so as to atomize the fuel. By locating the nozzle orifice on the center axis of the catalytic converter 15a, condensation of fuel to the wall surface of the mixer 13 can be limited, allowing for variation in the fuel and oxidizer mixture ratio to be suppressed at the time of reaction. For this reason, the center axis of the catalytic converter 15a is arranged offset with respect to the operational axis of the fuel injector 11a.

The reforming part 15 includes a tubular catalytic converter 15a arranged to have the center axis thereof extending along the supply direction of fuel and oxidizer out of the supply portion. The catalytic converter 15a is composed of a substrate supporting the catalytic component. The catalytic component used in the embodiment is not limited particularly as long as the effect of the invention is produced, and can be a conventionally known catalytic component. Specifically, the catalytic component can be $Rh/Al_2O_3$, etc., for example. After adding $_\gamma Al_2O_3$ to the nitric-acid Rh solution, the catalytic component $Rh/Al_2O_3$ can be obtained by the impregnation method. Likewise, the substrate is not limited particularly as long as the effect of the invention is produced, and can be a conventionally known substrate. Specifically, the substrate can be a porous body made of, for example, alumina, cordierite, mullite, and silicon carbide (SiC), or a metal mesh made of stainless steel or the like. The method of binding the catalyst to the substrate is not limited particularly as long as the effect of the invention is produced. For example, by impregnating the substrate shaped like a tube into a catalytic component bath, the catalytic converter 15a is obtained in which the catalytic component is adsorbed and supported in layers on the inner wall surface of the fine pores of the substrate.

The catalytic converter 15a is formed so that the following is established:

An inlet linear velocity range between 35 and 150 cm/sec and exit linear velocity range between 5 and 20 cm/sec. As described later, the catalytic converter 15a having the outside diameter, inside diameter, and length set to establish such a relationship can provide efficient reforming when compared with the conventional cylindrical catalytic converter.

It is well known in the art that longer residence time of the reactants in the catalytic reactor is required for completing many reactions. However, results with the reactor described in this invention show higher apparent conversion at higher space velocities (See Table 1). This is due to the short residence time effect (at the inlet) which improves the selectivity to partial conversion products for some reactions (e.g., the fast oxidation reactions), while longer residence times (at the exit) are beneficial for slower reactions (e.g., reforming reactions such as water gas shift). A tubular reactor, similar to the one described in this invention, can permit variable residence times within the same reactor. An additional benefit is potentially lower reactor temperatures due to lower heat release at the low residence times (at the reactor inlet). This cannot be achieved in a cylindrical reactor. Since, by definition, a single residence time in a tubular reactor cannot capture the significantly different inlet and exit region residence times, linear velocity at the entrance and exit of the reactor is used to define a preferred operating range for the reforming reactions under consideration here. This is defined in the following section with reference to a cylindrical and tubular reactor.

**Conv vs GHSV**

Table 1

In the diagram below, a cylindrical reactor with an axial inlet and exit and a diameter ($D_c$) and length (L) is shown next to a Tubular reactor with a radial inlet ($D_{T-in}$) and exit ($D_{T-ex}$) diameters. For the purpose of this analysis, both the reactors have equal volumes, hence equal overall residence times. The cylindrical reactor dimensions are 1 inch length (L) and $D_c$ = 1.6 inch for a reactor volume of 2 $in^3$. The tubular reactor dimensions are 1 inch length (L) and $D_{T-in}$ = 0.25 inch and $D_{T-ex}$ = 1.62 inch for a reactor volume of 2 $in^3$. The inlet and exit velocities for the cylindrical reactor (diagram a) are the same for a given mass flow. A mass flow of 25 liters per minute, for example, results in inlet and exit velocities of 20.5 cm/sec in the cylindrical reactor. For the same flow rate of 25 liters per minute the inlet and exit velocities in the tubular reactor are 82.2 and 12.7 cm/sec respectively at constant temperature.

(a) Cylindrical reactor; (b) Tubular reactor.

In the cylindrical reactor, a lower linear velocity can result in higher reactor temperatures at the inlet, potentially exceeding practical material limits. However, high inlet velocities can be achieved in a cylindrical reactor by making its diameter much smaller and longer. This however would result in a long and skinny reactor with unacceptably high pressure drop and the lower selectivity to desired partial oxidation reaction (CPOX) products.

Higher inlet velocities combined with lower exit velocities for the tubular reactor permit desirable operation of the reforming reactions whereby high fuel conversion can be achieved within reasonable material temperature limits. Preferably, the reactor inlet linear velocity is between approximately five to thirty times the reactor outlet linear velocity.

The preferred linear velocity range for desirable performance for the partial oxidation of diesel in a tubular reactor has been found to be between 35 and 150 cm/sec and between 5 and 20 cm/sec for inlet and exit velocities respectively. The flow velocities can be determined by dividing the total inlet volumetric flow by the flow area. The inlet and exit area for the cylindrical reactor is defined by {flow rate}$\div${$\pi(D_c/2)^2 L$}. The inlet and exit flow area for the tubular reactor are defined by {flow rate}$\div${$\pi(D_{T-in}/2)^2 L$}and by {flow rate}$\div${$\pi(D_{T-ex}/2)^2 L$} respectively. The flow velocities are therefore a function of the length (L) of the catalyst and the inner and outer diameters.

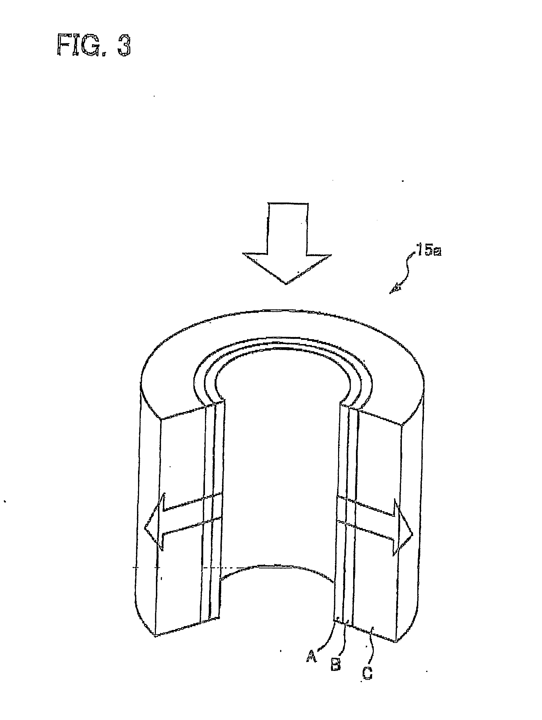

The reforming portion 15 is arranged along the inner wall of the catalytic converter 15a, and includes the communication passage 15b. The hollow portion of the tubular catalytic converter 15a constitutes principally the communication passage 15b. The communication passage 15b can lead a fuel and oxidizer gas mixture supplied from the mixer illustrates 13 to the catalytic converter 15a. FIG.3 schematically illustrates the flow of a fuel and oxidizer gas mixture at that time. As shown by the arrows in FIG. 3, a fuel and oxidizer gas mixture introduced through the communication passage 15b passes from the inner wall of the catalytic converter 15a to the outer wall thereof by diffusing radially. As described later, it is assumed that the reactions expressed by the equations (1), (2),and (3)occur predominantly in regions A, B, and C of FIG. 3, respectively. Thus, fuel is reformed in the process of passing through the catalytic converter 15a, thereby manufacturing hydrogen-rich fuel gas.

The outlet portion 16 includes a discharge passage 16a and a discharge port 16b, Hydrogen-rich fuel gas generated by the reforming reaction occurring when passing though the catalytic converter 15a is discharged from the discharge port 16b through the discharge passage 16a. Since the oxidizer such as air is introduced from the oxidizer inlet portion 12, a certain pressure is applied to the inside of the fuel reformer 10, thereby discharging hydrogen-rich fuel gas as generated. Hydrogen-rich fuel gas as discharged may be used as various energy sources, reducers, etc.

The fuel used in the fuel reformer 10 is not limited particularly as long as the effect of the invention is produced. Specifically, examples of fuel are hydrocarbon fuels such as gasoline, light oil (diesel fuel) or biodiesel fuel, natural gas, propane gas, and alcohol fuel such as methanol or ethanol. Among them, hydrocarbon fuel is preferably used, and light oil is more preferably used.

The oxidizer used in the fuel reformer 10 is not limited particularly as long as the effect of the invention is produced. Specifically, examples of the oxidizer are air, oxygen-rich air, oxygen, gas mixtures having oxygen and nitrogen as main components, steam, etc. Among them, air and gas mixtures having oxygen and nitrogen as main components are used preferably. If the amount of oxygen introduced is excessive, hydrogen generated by the reforming reaction will be oxidized and converted to water, reducing the yield of hydrogen.

Preferably, the fuel reformer 10 is operated within the range in which partial oxidation reaction occurs. Since partial oxidation is an exothermic reaction, the effective use of the heat generated can be obtained by operation within the range in which partial oxidation occurs. Specifically, by setting the fuel and oxidizer mixture ratio appropriately within a predetermined range in accordance with the size and temperature of the catalytic converter 15a and the type, loading amount, etc. of the catalytic converter, operation through which partial oxidation reaction occurs can be achieved.

The reforming reaction of the fuel reformer 10 takes place with temperatures inside of the tube of the catalytic converter 15a in the range of about 600° to about 1000°C. The reaction temperature is set as appropriate within the abovementioned range in accordance with the type, loading amount, etc. of the catalytic component to be used. In this embodiment, the reforming reaction of the fuel reformer 10 takes place at nearly atmospheric pressure.

Operation of the fuel reformer 10 having the abovementioned configuration is described hereafter.

First, a predetermined amount of fuel is introduced from the fuel injector 11a of the fuel inlet portion 11, and a predetermined amount of the oxidizer is introduced from the nozzle 12a of the oxidizer inlet portion 12. After uniform mixing in the mixer 13, the fuel and oxidizer introduced are fed to and pass through the communication passage 15b, then heated and combusted by the heating of the glow plug 14. A fuel and oxidizer gas mixture warmed in the communication passage 15b passes from the inner wall of the catalytic converter 15a to the outer wall thereof by forced convection. In the process of passing through the catalytic converter 15a, fuel is reformed by the catalytic component. Hydrogen-rich fuel gas as generated by reforming is discharged from the discharge port 16b through the discharge passage 16a of the outlet portion 16. The glow plug 14 produces heat only at the time of startup. When the temperature of the inner wall of the catalytic converter 15a reaches a predetermined temperature, the reaction continues as a spontaneous process.

The effect of the fuel reformer 10 showing such an operation is described hereafter in terms of reforming efficiency, manufacturing cost, startability, device size, transient properties, and the amount of hydrogen produced.

Reforming Efficiency

The catalytic converter 15a of the fuel reformer 10 provides a reaction similar to the conventional reaction, and is separated into three reactions. The chemical equations of the three reactions are given by the following chemical equations (1) to (3). The first reaction is a combustion reaction through which steam is generated by the reaction of fuel and oxygen, and occurs on the outermost surface of the catalytic converter. The second reaction is an oxidation reaction through which hydrogen and carbon monoxide are generated by partial oxidation of fuel after a slight reduction in the oxygen concentration. Oxygen consumption continues to be consumed in the second reaction stage. Finally, the third reaction is a reaction through which hydrogen is generated by the reaction of steam generated through the first reaction and fuel, with the oxygen amount being substantially zero.

$$C_nH_m+(n+\tfrac{1}{4}m)O_2 \rightarrow \tfrac{1}{2}mH_2O+nCO_2 \qquad \text{Equation (1)}$$

$$C_nH_m+\tfrac{1}{2}nO_2 \rightarrow mH_2+nCO \qquad \text{Equation (2)}$$

$$C_nH_m+nH_2O \rightarrow (n+\tfrac{1}{2}m)H_2+nCO \qquad \text{Equation (3)}$$

The tubular catalytic converter 15a used in the embodiment has the feature that the reaction cross-sectional area becomes larger as the radial distance from the center axis of the cylinder increases. Moreover, the tubular catalytic converter 15a has the feature that the residence time of fuel gas is the shortest in the portion closest to the center axis of the cylinder, and becomes longer with distance. Since the reactions occur in the order of the first reaction, the second reaction, and the third reaction, as described above, the first and second reactions occur in the portion having the smallest reaction cross-sectional area, i.e., the surface portion of the inner wall of the tube, and the third reaction occurs in the remaining volume, having a larger reaction cross-sectional area. Therefore, considering that the first reaction, the second reaction, and the third reaction occur from the side closest to the center axis of the tube in increasing order of reaction rate, it can be said that the catalytic converter 15a used in the embodiment has a rational configuration by which higher reforming efficiency is obtained.

Manufacturing Cost

The exothermic reforming reaction is a differential reaction. For this reason, there arises a problem of high temperature in the reaction early-stage section with which fuel and oxidizer as introduced to the catalytic converter 15a make contact first. The problem of high temperature leads to a problem related to the heat resistance of the material. Specifically, the conventional tube-type flow reactor needs to use a material of higher heat resistance in the portion in which the reaction early-stage section and the reactor casing (tube) make contact with each other. On the other hand, the fuel reformer 10 according to the embodiment is configured so that the portion that of the catalytic converter 15a with the most exothermic activity (i.e., surface portion of the inner wall) does not contact the casing of the reforming portion 15. For this reason, the casing can be manufactured from a cheaper material. Moreover, no heater for fuel and oxidizer is required. This allows for a reduction in manufacturing cost.

Startability and Device Size

The fuel reformer 10 according to the embodiment includes an ignition device such as a glow plug 14 in the communication passage 15b, and has the feature that the ignition space is limited. For this reason, when burning a gas mixture of fuel and oxidizer by way of the ignition device, heat efficiently transmits to the catalytic converter 15a. Specifically, since ignition occurs in the catalytic converter 15a inside the ignition point, and thus the distance is small from the ignition point to the catalytic component layer, the surface portion of the inner wall of the catalytic converter 15a can be heated quickly after ignition. Moreover, quick combustion can be obtained using less fuel. A distinction from the conventional tube-type flow reactor in which combustion occurs upstream of the catalytic converter, most of the generated heat is transmitted to the catalytic converter 15a without being transmitted to the inner surface of the tube (casing). For this reason, a distinction from the conventional tube-type flow reactor, the fuel reformer 10 according to the embodiment needs no electric heating means or device. This allows for superior startability and size reduction of the fuel reformer 10.

Transient Characteristics and Device Size

With a conventional tube-type flow reactor, when injecting fuel by way of a fuel injector, the injected fuel may condense on the wall surface of the tube (casing), introducing a problem where the amount of fuel flowing into the catalytic converter varies momentarily. On the other hand, with the fuel reformer 10 according to the embodiment, since the mixer 13 is short in length, and has a peripheral wall to which fuel is apt to adhere and is composed of the catalytic converter 15a, fuel does not condense on the wall surface of the casing. As a result of quick evaporation of fuel, hydrogen can be produced stably without any momentary variations in the fuel and oxidizer mixture ratio. Moreover, a distinction from the conventional related art, there is no need to mix fuel and oxidizer after preheating thereof so as to avoid variations in the amount of hydrogen produced, leading to no need for a heater. Therefore, the fuel reformer 10 according to the embodiment not only provides superior transient characteristics, but also allows for a reduction in device size and energy consumption.

Amount of Hydrogen Produced

The catalytic converter 15a used in the fuel reformer 10 according to the embodiment has the advantage that in the early-stage of the reaction, the cross-sectional area can be increased when compared with the catalytic converter of the conventional tube-type flow reactor. The partial oxidation mainly occurs in the reaction early-stage section. Thus, in order to make the partial oxidation progress efficiently, it is essential to increase the cross-sectional area in the early-stage of the reaction. Moreover, when attempting to improve the reforming efficiency and increase the amount of hydrogen produced, it is essential to increase the cross-sectional area in the early-stage of the reaction.

With the conventional tube-type flow reactor, the catalytic converter has a cylindrical shape. Therefore, when the diameter is $D_2$ and the length is L, the volume of the catalytic converter is expressed by $D_2^2\pi L/4$, and the cross-sectional area in the early-stage of the reaction (i.e., value obtained by dividing the volume by the length L) is expressed by $D_2^2\pi/4$. On the other hand, with the fuel reformer 10 according to the embodiment, the catalytic converter 15a has a tubular shape. Therefore, when the inside diameter is $D_1$, the outside diameter is $D_2$, and the length is L, the volume of the tubular catalytic converter 15a is expressed by $(D_2^2 - D_1^2) \pi L/4$, and the inlet cross-sectional area is expressed by $D_1\pi L$ (i.e., surface area of the inner wall: circumference x length L).

Therefore, in order to enhance the reforming efficiency and increase the amount of hydrogen produced when compared with the cylindrical-shaped catalytic converter used in the conventional tube-type flow reactor, it is only necessary to form the tubular catalytic converter 15a so as to satisfy the relational expression of $D_1\pi L > D_2^2\pi/4$. In this regard, the catalytic converter 15a used in the embodiment is formed to satisfy the relationship $L > D_2^2/4D_1$ and derived from the relational expression as described above. For this reason, the fuel reformer 10 according to the embodiment can increase the amount of hydrogen produced when compared with the conventional related art. Actually, in order to produce 1 L or more of hydrogen-rich fuel gas, for example, the length of the catalytic converter 15a should be set at a certain value. For this reason, the outside diameter, inside diameter, and length of the catalytic converter 15a are set to yield a desired amount of hydrogen within the range that satisfies an inlet linear velocity range between 35 and 150 cm/sec and exit linear velocity range between 5 and 20 cm/sec.

Periodic lean operation

Carbon buildup within the reactor is likely to occur over time. Periodic lean operation is desirable for removing such deposits by operating for brief periods in deep oxidation mode. Deep oxidation (i.e. combustion) helps to oxidize the carbon. This can however result in excessively high temperatures. Care therefore has to be taken to avoid high reactor temperatures during the periodic lean operation. Therefore, the rich/lean rate is directed by converter size (reactor mass), fuel flow rate, air flow rate, etc. Nevertheless, three possible embodiments of lean operation are described here. Note that these all are subject to operation below the maximum allowable reactor temperature of 1050°C.

(i) Very short oxidation pulse (order of milliseconds):

When the fuel reformer is operated continuously over long periods (e.g. 1-10 hrs)" bursts of periodic lean operation may be implemented to remove the carbon buildup. An electromagnetically driven injector can be used to vary/shut off the fuel flow such that the reforming reactor operates under a fuel-lean environment. In example (i), the duration of the lean cycle is ~25% of the period. The cycle consists of a rich period (150 msec) at O/C = 1.0, followed by a lean period (50 msec) with only air flow. For a total interval time of 200 msec. The small amount of remaining fuel at the end of the rich period may be sufficient to support the oxidation reactions. The frequency of this pulse is based on carbon buildup profiles observed in the reactor.

(ii) Short oxidation pulse (order of seconds):

This is another alternative periodic lean operation example for long term and continuous operation of a fuel reformer over 1-10 hours or greater.. In example (ii), the duration of the lean cycle is ~10% of the period. The cycle consists of a rich period (18 sec) at O/C = 1.0, followed by a lean period (2 sec) with only air flow. This gives a total interval time of 20 sec. As before the frequency of this pulse is based on carbon buildup profiles observed in the reactor and subject to the maximum reactor temperature limitation.

(iii) Oxidation cleanup at shutdown:

When the fuel reformer is operated for short periods (e.g. <1 hr), introducing air at shutdown (after fuel has been shutoff) may be adequate for oxidizing the carbon buildup. This is called a "burn off" cycle. As mentioned earlier, with air operation, the reactor temperature rises immediately. Air addition must therefore be stopped if the converter temperature exceeds 1050 degree C. An example condition consists of rich operation for 300sec at O/C=1.0 and lean operation for 15 ~ 20sec (only air) at shutdown, for a total operation time of 320sec.

In embodiments (2) and (3) described above, O/C=3.0 or more as a lean condition is within the operating range as well.

While the preferred embodiment of the present invention has been described and illustrated above, it is to be understood that the embodiment is exemplary of the invention and is not to be considered to. be limiting. Additions, omissions, substitutions, or other modifications can be made thereto without departing from the spirit or scope of the present invention. Accordingly, the invention is not to be considered to be limited by the foregoing description, and is only limited by the scope of the appended claims.

A fuel reformer includes a reforming portion having a tubular catalytic converter that is composed of a substrate supporting the catalytic component, and is arranged to have a center axis extending along the supply direction of the fuel and oxidizer derived from a supply portion, and a communication passage arranged along an inner wall of the catalytic converter and communicating with the supply portion. The fuel and oxidizer supplied from the supply portion to the communication passage pass from the inner wall of the catalytic converter to an outer wall thereof by forced convection, thereby reforming the fuel.

## Claims

1. A fuel reformer, comprising:

   a reforming portion that dry reforms a fuel by way of an oxidizer to generate a hydrogen-rich fuel gas;
   a fuel inlet portion, comprising an electromagnetically driven injector, that introduces the fuel;
   an oxidizer inlet portion that introduces the oxidizer;
   a mixer that mixes the fuel and oxidizer introduced;
   a supply portion that supplies to the reforming portion the fuel and oxidizer as mixed in the mixer; and
   a reformer outlet portion that discharges the hydrogen-rich fuel gas generated in the reforming portion,
   the reforming portion comprising a tubular catalytic converter comprising a substrate supporting a catalytic component, the catalytic converter being arranged to have a center axis extending along a supply direction of the fuel and oxidizer supplied from the supply portion, and a communication passage defining a reactor inlet and a reactor outlet, the reactor inlet arranged along an inner wall of the catalytic converter and communicating with the supply portion,
   the fuel and oxidizer supplied from the supply portion to the communication passage passing from the inner wall of the catalytic converter to an outer wall thereof by forced convection, whereby the reactor inlet linear velocity is between approximately five to thirty times the reactor outlet linear velocity thereby reforming the fuel.

2. The fuel reformer as claimed in claim 1, wherein the reactor inlet linear velocity is between approximately 35 - 150 cm/sec and the reactor outlet linear velocity is between approximately 5 and 20 cm/sec.

3. The fuel reformer as claimed in claim 1, further comprising at least one selected from a glow plug and a spark plug, in an inner tube of the catalytic converter.

4. The fuel reformer as claimed in claim 1, wherein the oxidizer is a gas mixture having main components of oxygen and nitrogen.

5. The fuel reformer as claimed in claim 1, wherein the oxidizer is air.

6. The fuel reformer as claimed in claim 1, wherein the fuel is a hydrocarbon fuel.

7. The fuel reformer as claimed in claim 1, wherein the fuel is light oil.

**8.** The fuel reformer as claimed in claim 1, wherein the catalytic converter is formed so that a relationship represented by the following mathematical expression (I) is established:

$$L > \frac{D_2^2}{4D_1} \qquad \text{Expression (I)}$$

Where $D_1$, $D_2$ and L are an inside diameter, an outside diameter, and a length of the catalytic converter, respectively.

**9.** The fuel reformer as claimed in claim 1, wherein the supply portion comprises an electromagnetically driven injector.

**10.** The fuel reformer as claimed in claim 9, wherein the fuel injector is controlled such that the reforming reactor periodically operates under fuel lean conditions.

FIG. 1

**FIG. 2**

FIG. 3

15a

A  B  C

FIG. 4

Europäisches
Patentamt

European
Patent Office

Office européen
des brevets

**EUROPEAN SEARCH REPORT**

Application Number

EP 09 15 7393

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/028445 A1 (ROYCHOUDHURY SUBIR [US] ET AL) 10 February 2005 (2005-02-10) | 1-7,9,10 | INV. C01B3/38 B01J8/02 B01J8/04 |
| Y | * paragraphs [0004], [0009], [0019], [0026] - [0032] * * figures 1-3 * | 8 | |
| X | US 6 783 742 B2 (BENTLEY JEFFREY M [US] ET AL) 31 August 2004 (2004-08-31) * column 5, line 16 - column 7, line 53 * * figures 1,3 * | 1-7,9,10 | |
| X | US 2007/084118 A1 (KAEDING STEFAN [DE] ET AL) 19 April 2007 (2007-04-19) * paragraphs [0004], [0028]; figure 1 * | 1-7,9,10 | |
| Y | WO 2004/060546 A (PRECISION COMBUSTION INC [US]) 22 July 2004 (2004-07-22) * page 4, lines 2-16 * * pages 6,7 * * figure 1 * | 8 | |
| A | DE 10 2004 049903 A1 (WEBASTO AG FAHRZEUGTECHNIK [DE] ENERDAY GMBH [DE]) 20 April 2006 (2006-04-20) * the whole document * | 1,2 | TECHNICAL FIELDS SEARCHED (IPC) C01B B01J |
| A | DE 199 30 051 A1 (DAIMLER CHRYSLER AG [DE]) 18 January 2001 (2001-01-18) * the whole document * | 1 | |

The present search report has been drawn up for all claims

| Place of search | Date of completion of the search | Examiner |
|---|---|---|
| The Hague | 1 July 2009 | Baumlin, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 15 7393

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2009

| Patent document cited in search report | | | Publication date | Patent family member(s) | | | Publication date |
|---|---|---|---|---|---|---|---|
| US | 2005028445 | A1 | 10-02-2005 | US | 2008127553 | A1 | 05-06-2008 |
| US | 6783742 | B2 | 31-08-2004 | AU | 751834 | B2 | 29-08-2002 |
| | | | | AU | 2228499 | A | 02-08-1999 |
| | | | | CA | 2317447 | A1 | 22-07-1999 |
| | | | | EP | 1047631 | A1 | 02-11-2000 |
| | | | | JP | 2002509068 | T | 26-03-2002 |
| | | | | US | 6245303 | B1 | 12-06-2001 |
| | | | | WO | 9936351 | A1 | 22-07-1999 |
| | | | | US | 2002000066 | A1 | 03-01-2002 |
| US | 2007084118 | A1 | 19-04-2007 | AU | 2004298418 | A1 | 30-06-2005 |
| | | | | CA | 2550047 | A1 | 30-06-2005 |
| | | | | CN | 101076394 | A | 21-11-2007 |
| | | | | DE | 10359205 | A1 | 14-07-2005 |
| | | | | WO | 2005058751 | A2 | 30-06-2005 |
| | | | | EP | 1694598 | A2 | 30-08-2006 |
| | | | | JP | 2007516328 | T | 21-06-2007 |
| | | | | KR | 20070005561 | A | 10-01-2007 |
| WO | 2004060546 | A | 22-07-2004 | AU | 2003297883 | A1 | 29-07-2004 |
| | | | | US | 2006233702 | A1 | 19-10-2006 |
| DE | 102004049903 | A1 | 20-04-2006 | AU | 2005293958 | A1 | 20-04-2006 |
| | | | | CA | 2584193 | A1 | 20-04-2006 |
| | | | | CN | 101040147 | A | 19-09-2007 |
| | | | | WO | 2006039909 | A1 | 20-04-2006 |
| | | | | EP | 1800055 | A1 | 27-06-2007 |
| | | | | JP | 2008516185 | T | 15-05-2008 |
| | | | | KR | 20070061574 | A | 13-06-2007 |
| | | | | US | 2008020336 | A1 | 24-01-2008 |
| DE | 19930051 | A1 | 18-01-2001 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6869456 B2
- US 6887436 B1
- US 6869456 B
- US 6887436 B